# FASCICULE DE BREVET EUROPEEN

(11) **EP 4 299 446 B1**
(45) Date de publication et mention de la délivrance du brevet: **28.08.2024**
(21) Numéro de dépôt: 23178859.7
(22) Date de dépôt: 13.06.2023
(51) Int. Cl.: B64D 29/06

(54) **ENSEMBLE DE MOTORISATION D'AERONEF COMPORTANT DES CAPOTS DE SOUFFLANTE AMOVIBLES**
MOTORISIERUNGSEINHEIT FÜR EIN FLUGZEUG MIT ABNEHMBAREN LÜFTERHAUBEN
AIRCRAFT DRIVE UNIT COMPRISING REMOVABLE FAN COVERS

(30) Priorité: 30.06.2022 FR 2206615
(43) Date de publication de la demande: 03.01.2024
(73) Titulaire: AIRBUS OPERATIONS (S.A.S.), 31060 Toulouse (FR)
(72) Inventeur: MAHE, Mathieu, 31060 TOULOUSE (FR); JOURNADE, Frédéric, 31060 TOULOUSE (FR); DEFORET, Thomas, 31060 TOULOUSE (FR); RENAUD, Eric, 31670 LABEGE (FR); KALETA, Mathieu, 31670 LABEGE (FR)
(74) Mandataire: Airbus-OPS SAS

(56) Documents cités:
- EP-A1- 2 862 805
- WO-A1-2018/178589
- CN-A- 113 548 189
- FR-A1- 3 007 390
- US-A1- 2022 055 760

## Description

La présente invention concerne un ensemble de motorisation d'aéronef qui comporte des capots de soufflante amovibles.

Un aéronef comporte un fuselage de chaque côté duquel est fixée une aile. Sous chaque aile est suspendu au moins un mât, et pour chaque mât, un ensemble de motorisation qui comporte une structure. Le mât est fixé entre la structure de l'aile et la structure de l'ensemble de motorisation. L'ensemble de motorisation comporte autour de la structure et à l'avant, un capot de nez qui est solidaire de la structure et délimite une entrée d'air. L'ensemble de motorisation comporte également deux capots de soufflante qui sont de part et d'autre d'un plan médian vertical de l'ensemble de motorisation, à l'arrière du capot de nez, et délimitent un canal de soufflante à l'arrière de l'entrée d'air.

L'ensemble de motorisation comporte également un moteur, tel qu'un turboréacteur double flux qui est solidaire de la structure et dont le noyau est alimenté en air par un flux primaire issu du canal de soufflante et où un flux secondaire, issu également du canal de soufflante, s'écoule autour dudit noyau.

L'ensemble de motorisation comporte également des capots inverseurs de poussée disposés de part et d'autre du plan médian vertical et prévus pour générer une poussée vers l'avant de l'aéronef lorsque ce dernier freine. Les capots inverseurs de poussée sont disposés à l'arrière des capots de soufflante.

Les capots de soufflante et les capots inverseurs de poussée sont montés articulés sur le mât par l'intermédiaire de charnières et le mât s'étend ainsi au-dessus des capots de soufflante et des capots inverseurs de poussée.

Du fait de cet arrangement, le mât constitue une structure relativement volumineuse et lourde au-dessus de l'ensemble de motorisation et il est donc nécessaire de trouver un arrangement qui permet de réduire les dimensions du mât.

Un objet de la présente invention est de proposer un ensemble de motorisation pour un aéronef, ledit ensemble de motorisation comportant une structure sur laquelle sont montés un capot de nez et des capots inverseurs de poussée et autour de laquelle sont montés de manière amovible, entre le capot de nez et les capots inverseurs de poussée, des capots de soufflante qui n'ont aucune liaison mécanique directe avec le mât.

À cet effet, est proposé un ensemble de motorisation pour aéronef tel que revendiqué dans la revendication 1.

Avec un tel arrangement, les capots de soufflante n'ont aucune liaison mécanique directe avec le mât ce qui ne nécessite pas que ce dernier s'étende au-dessus des capots de soufflante.

La demande de brevet EP2862805 décrit le préambule de la revendication 1.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- La figure 1 est une vue de côté d'un aéronef selon l'invention,
- La figure 2 est une vue en perspective d'un ensemble de motorisation selon l'invention,
- La figure 3 est une coupe partielle selon un plan radial de la Fig. 2 pour un mode de réalisation de l'invention,
- La Figure 4 est une vue en perspective des capots de soufflante de l'ensemble de motorisation selon l'invention en position ouverte,
- La figure 5 est une vue en perspective d'un mode de réalisation des charnières entre les deux capots de soufflante, et
- La figure 6 est une coupe partielle selon un plan radial de la Fig. 2 pour un mode de réalisation ne faisant pas partie de l'invention.

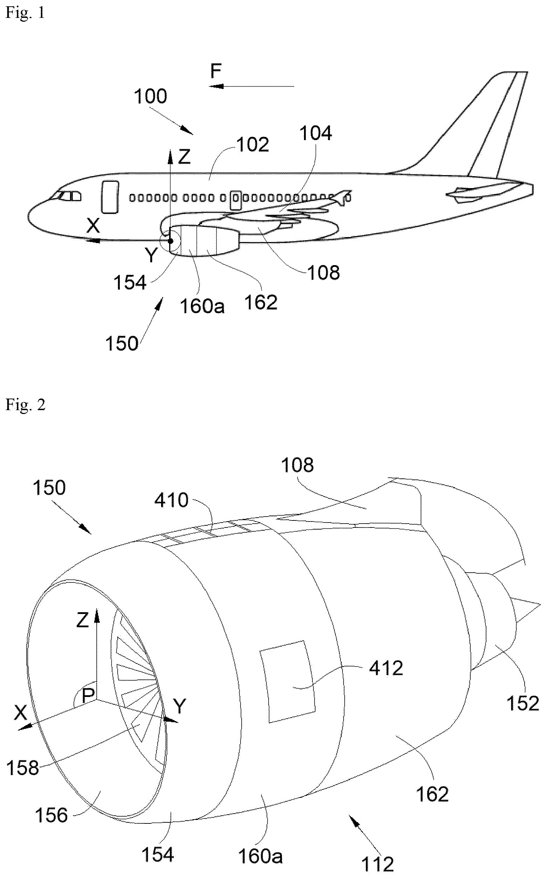

Dans la description qui suit, les termes relatifs à une position sont pris en référence à un aéronef en position d'avancement tel que représenté sur la Fig. 1.

La Fig. 1 montre un aéronef 100 qui comporte un fuselage 102 de chaque côté duquel est fixée une aile 104 qui porte au moins un ensemble de motorisation 150 selon l'invention.

Dans la description qui suit, et par convention, on appelle X la direction longitudinale de l'ensemble de motorisation 150 qui est parallèle à l'axe longitudinal de l'aéronef 100 orienté ici positivement dans le sens d'avancement de l'aéronef 100, on appelle Y la direction transversale horizontale lorsque l'aéronef 100 est au sol, et Z la direction verticale lorsque l'aéronef 100 est au sol, ces trois directions X, Y et Z étant orthogonales entre elles.

La flèche F représente la direction en marche avant de l'aéronef 100 lorsque les ensembles de motorisation 150 sont en fonctionnement.

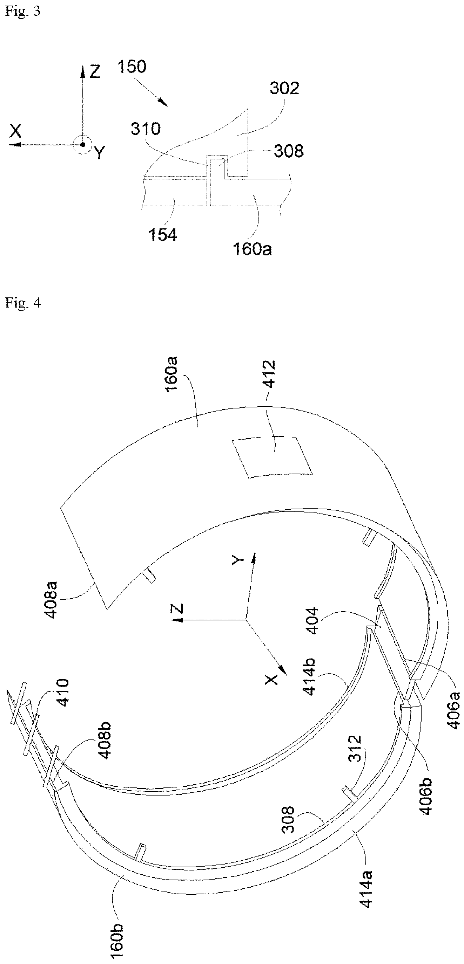

La Fig. 2 montre l'ensemble de motorisation 150 en perspective et la Fig. 3 montre une coupe partielle de l'ensemble de motorisation 150.

L'ensemble de motorisation 150 comporte une structure 302 et un moteur fixé à la structure 302 comme par exemple un turboréacteur double flux et qui est représenté ici par son cône d'éjection 152.

L'ensemble de motorisation 150 est fixé à la structure de l'aile 104 par l'intermédiaire d'un mât 108 qui solidarise la structure 302 et la structure de l'aile 104.

L'ensemble de motorisation 150 comporte autour de la structure 302 et à l'avant, un capot de nez 154 qui est solidaire de la structure 302 et délimite une entrée d'air 156 destinée à alimenter en air le moteur à travers une soufflante 158. Dans le cas d'un turboréacteur double flux, le flux d'air est divisé en un flux primaire qui alimente en air un noyau du moteur et en un flux secondaire qui s'écoule autour du noyau. La fixation du capot de nez 154 à la structure 302 s'effectue par tous moyens appropriés connus de l'homme du métier, par exemple par des boulons.

Comme le montre la Fig. 4, l'ensemble de motorisation 150 comporte également deux capots de soufflante 160a-b qui sont ici de part et d'autre d'un plan médian vertical P (XZ) de l'ensemble de motorisation 150. Les capots de soufflante 160a-b sont à l'arrière du capot de nez 154 et délimitent à l'arrière de l'entrée d'air 156, un canal de soufflante dans lequel ladite soufflante 158 est agencée. Les capots de soufflante 160a-b sont autour de la structure 302.

L'ensemble de motorisation 150 comporte également deux capots inverseurs de poussée 162 disposés de part et d'autre du plan médian vertical P et prévus pour générer une poussée vers l'avant de l'aéronef 100 lorsque ce dernier freine. Les capots inverseurs de poussée 162 sont disposés à l'arrière des capots de soufflante 160a-b autour de la structure 302.

Le capot de nez 154, les capots de soufflante 160a-b et les capots inverseurs de poussée 162 forment une nacelle 112 de l'ensemble de motorisation 150 et forment ensemble une surface extérieure aérodynamique de l'ensemble de motorisation 150.

Les capots inverseurs de poussée 162 sont montés articulés sur le mât 108 par l'intermédiaire de charnières. Cet assemblage ne faisant pas partie de l'invention, il ne sera pas décrit plus en détail, l'homme du métier pouvant mettre en oeuvre tous les types d'assemblage connus.

La Fig. 3 montre les deux capots de soufflante 160a-b séparés de la structure 302. Il y a ainsi un premier capot de soufflante 160a, ici à bâbord, et un deuxième capot de soufflante 160b, ici à tribord, et chacun prend la forme d'un panneau arqué, chacun s'étendant sur globalement 180° pour recouvrir entièrement la structure 302. Chaque capot de soufflante 160a-b comporte un bord avant 414a et un bord arrière 414b chacun étant arqué autour de la direction longitudinale X pour venir autour de la structure 302. Chaque capot de soufflante 160a-b comporte également un bord proximal 406a-b et un bord distal 408a-b qui sont globalement rectilignes et relient entre eux les bords avant 414a et arrière 414b. Le bord proximal 406a-b et le bord distal 408a-b sont globalement parallèles à la direction longitudinale X.

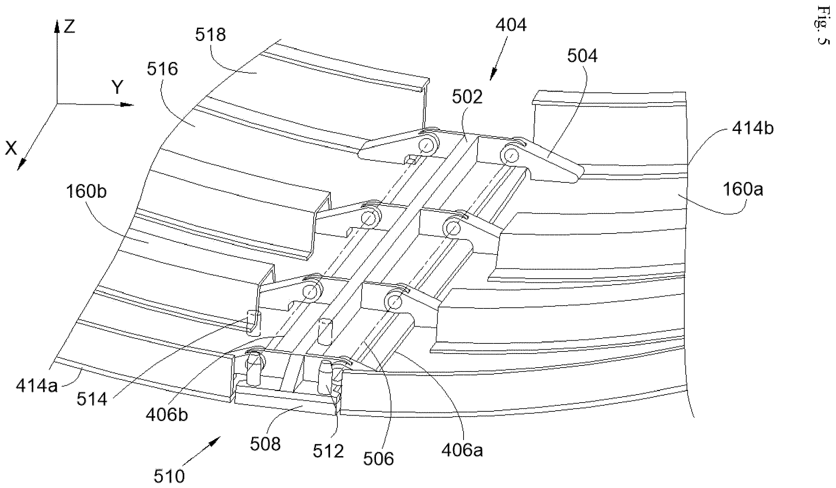

Le bord proximal 406a du premier capot de soufflante 160a est monté de manière articulée au bord proximal 406b du deuxième capot de soufflante 160b par un système de charnière 404 dont un mode de réalisation est représenté à la Fig. 5. Les deux capots de soufflante 160a-b sont ainsi montés articulés l'un avec l'autre sans passer par le mât 108 ou la structure 302. Le système de charnière 404 n'est fixé rigidement ni à la structure 302 ni au mât 108 et il est structurellement solidaire uniquement des capots de soufflante 160a-b.

Le bord distal 408a du premier capot de soufflante 160a est relié au bord distal 408b du deuxième capot de soufflante 160b par un système de verrouillage 410. Le système de verrouillage 410 peut prendre alternativement une position de verrouillage dans laquelle les deux bords distaux 408a-b sont verrouillés l'un avec l'autre et une position de déverrouillage dans laquelle les deux bords distaux 408a-b sont libres l'un par rapport à l'autre. La Fig. 2 montre la position de verrouillage et la Fig. 4 montre la position de déverrouillage. Le système de verrouillage 410 peut être tous systèmes déverrouillables connus par l'homme du métier et utilisés pour solidariser deux capots ensemble, comme des serrures par exemple.

Le retrait des capots de soufflante 160a-b consiste ainsi à :
- placer le système de verrouillage 410 en position de déverrouillage,
- écarter les deux capots de soufflante 160a-b par rotation autour du système de charnière 404, ce qui tend à séparer les capots de soufflante 160a-b de la structure 302, et
- retirer les deux capots de soufflante 160a-b.

La mise en place des capots de soufflante 160a-b se fait de la manière inverse et consiste à :
- placer les capots de soufflante 160a-b qui sont écartés entre le capot de nez 154 et les capots inverseurs de poussée 162 autour de la structure 302,
- rapprocher les deux capots de soufflante 160a-b par rotation autour du système de charnière 404, ce qui tend à plaquer les capots de soufflante 160a-b contre la structure 302, et
- placer le système de verrouillage 410 en position de verrouillage.

Les capots de soufflante 160a-b n'ont ainsi aucune liaison mécanique directe avec le mât 108 et ils sont uniquement maintenus sur la structure 302 en l'enserrant. Étant donné que les capots de soufflante 160a-b ne sont pas fixés directement au mât 108, celui-ci n'a pas besoin de s'étendre au-dessus des capots de soufflante 160a-b et sa longueur peut alors être réduite comme cela est vu sur la Fig. 2, d'où également une réduction de la masse. Le fait que les capots de soufflante 160a-b n'ont pas de liaison avec le mât 108 permet de limiter les espaces et les jeux avec le capot de nez 154 et les capots inverseurs de poussée 162, d'où de meilleures performances aérodynamiques et moins de mouvements entre ces éléments pendant le vol.

Dans le mode de réalisation de l'invention présenté ici, le système de charnière 404 est disposé en partie basse des capots de soufflante 160a-b, c'est-à-dire à 6 heures par rapport à l'orientation de l'ensemble de motorisation 150. Ainsi, lorsque les capots de soufflante 160a-b sont écartés, ils se séparent de la structure 302 uniquement par gravité. Il suffit alors de placer un chariot élévateur sous les capots de soufflante 160a-b avant de placer le système de verrouillage 410 en position de déverrouillage. Après déverrouillage, les capots de soufflante 160a-b s'écartent et, en descendant le chariot élévateur, les capots de soufflante 160a-b descendent et se séparent de la structure 302. Ils peuvent alors être déplacés vers l'avant pour être entièrement dégagés. Dans ce mode de réalisation, le système de verrouillage 410 est disposé en partie haute des capots de soufflante 160a-b, c'est-à-dire à 12 heures par rapport à l'orientation de l'ensemble de motorisation 150. Pour manoeuvrer le système de verrouillage 410, un technicien peut manoeuvrer directement le système de verrouillage 410, mais il peut également être prévu que le système de verrouillage 410 présente un actionneur déporté par exemple à mi-hauteur d'un capot de soufflante 160a-b.

D'une manière générale, le système de charnière 404 et le système de verrouillage 410 sont déportés l'un par rapport à l'autre et ici ils sont diamétralement opposés.

Bien sûr, il peut être prévu que les capots de soufflante 160a-b prennent une orientation différente autour de la structure 302 et ils peuvent prendre toutes les positions angulaires possibles autour de la direction longitudinale X. Par exemple, ils peuvent rester de part et d'autre du plan médian vertical P avec le système de charnière 410 en partie haute et le système de verrouillage 410 en partie basse. Le retrait des capots de soufflante 160a-b peut alors s'effectuer à l'aide d'un palan. Il est également possible de prévoir que le système de charnière 410 et le système de verrouillage 410 soient sur les côtés de manière diamétralement opposée et les capots de soufflante 160a-b sont alors de part et d'autre d'un plan horizontal.

Pour permettre un accès au moteur sous les capots de soufflante 160a-b, chacun d'eux peut présenter au moins une trappe 412 fixée de manière amovible audit capot de soufflante 160a-b par exemple à l'aide de boulons.

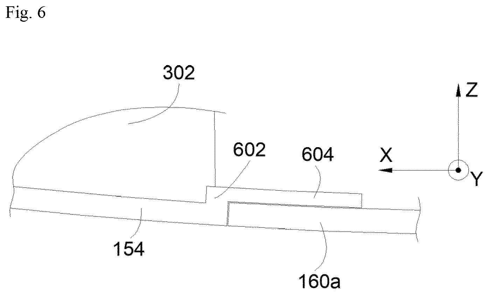

La Fig. 6 montre un assemblage dans lequel le capot de nez 154 comporte un décrochement 602 vers l'intérieur de l'ensemble de motorisation 150 et se prolonge vers l'arrière par une jupe 604 et les bords des capots de soufflante 160a-b sont en appui contre la jupe 604.

Pour assurer un bon positionnement en X, l'ensemble de motorisation 150 comporte des moyens de positionnement 308, 310, 312 (Fig. 4) qui sont répartis entre chaque capot de soufflante 160a-b et la structure 302 pour assurer un bon positionnement dudit capot de soufflante 160a-b par rapport à la structure 302 et un blocage du capot de soufflante 160a-b parallèlement à la direction longitudinale X lorsque le capot de soufflante 160a-b est en position et le système de verrouillage 410 est en position de verrouillage.

Selon un mode de réalisation particulier représenté en particulier à la Fig. 3 et à la Fig. 5, les moyens de positionnement comportent une nervure 308 réalisée le long d'au moins un des bords avant 414a ou arrière 414b de chaque capot de soufflante 160a-b et une rainure 310 réalisée dans la structure 302 et où la nervure 308 est logée dans la rainure 310.

Dans le mode de réalisation de l'invention présenté sur la Fig. 5, chaque capot de soufflante 160a-b prend la forme d'une peau 516 arquée renforcée sur sa face intérieure par des profilés 518 arqués fixés à ladite peau 516. Il y a ici un profilé 518 disposé au niveau du bord avant 414a et un profilé 518 disposé au niveau du bord arrière 414b, et chacun de ces profilés 518 constitue une nervure 308 des moyens de positionnement. D'une manière générale, au moins un desdits profilés 518 constitue une nervure 308 des moyens de positionnement.

En complément ou, suivant un mode de réalisation qui n'est pas selon l'invention, en remplacement de la nervure 308 et de la rainure 310, les moyens de positionnement comportent des doigts 312 qui s'étendent radialement par rapport à la direction longitudinale X et sont solidaires de chaque capot de soufflante 160a-b et pour chaque doigt 312, un logement réalisé dans la structure 302 et où ledit doigt 312 loge dans ledit logement. Un tel arrangement forme également un système de détrompeur et anti-rotation pour les capots de soufflante 160a-b. Dans le mode de réalisation de l'invention présenté sur la Fig. 4, les doigts 312 sont disposés au niveau du bord avant 414a, mais ils pourraient être au niveau du bord arrière 414b ou répartis au niveau des deux bords 414a-b.

La Fig. 5 montre un mode de réalisation du système de charnière 404 qui comporte une poutre 502 s'étendant parallèlement à la direction longitudinale X entre les bords proximaux 406a-b des deux capots de soufflante 160a-b. Pour chaque capot de soufflante 160a-b, le système de charnière 404 comporte une pluralité de leviers 504 où, pour chacun, une extrémité est fixée rigidement au capot de soufflante 160a-b et une extrémité est montée libre en rotation sur la poutre 502 autour d'un axe de rotation. Pour un même capot de soufflante 160a-b, tous les axes de rotation sont confondus et constituent l'axe de charnière 506 pour ledit capot de soufflante 160a-b.

Pour permettre le pivotement de chaque capot de soufflante 160a-b, il existe un espace entre la poutre 502 et le bord proximal 406a-b dudit capot de soufflante 160a-b. Pour limiter l'impact aérodynamique de ces espaces en vol, le système de charnière 404 comporte un cache 508 qui est fixé de manière amovible à la poutre 502 contre sa face orientée vers l'extérieur et ce cache 508 est dimensionné pour obturer les espaces et vient contre le bord proximal 406a-b de chaque capot de soufflante 160a-b.

La fixation du cache 508 est réalisée par tous moyens appropriés, par exemple des vis de serrage qui se vissent dans la poutre 502.

Pour assurer un bon positionnement de la poutre 502 par rapport à la structure 302, l'ensemble de motorisation 150 comporte un système de détrompeur 510 qui évite les erreurs de montage et assure que la poutre 502 se positionne de manière correcte par rapport à la structure. Le système de détrompeur 510 entre la poutre 502 et la structure 302 comporte ainsi des premiers éléments qui sont solidaires de la poutre 502 et des deuxièmes éléments qui sont solidaires de la structure 302 et où les premiers éléments et les deuxièmes éléments coopèrent pour réaliser le détrompage.

Dans le mode de réalisation de l'invention présenté à la Fig. 5, les premiers éléments 512 sont constitués ici de deux plots arrangés au niveau de l'extrémité avant de la poutre 502 et les deuxièmes éléments 514 (en traits fantôme) sont constitués de deux alésages 514 où chacun est prévu pour recevoir un desdits plots 512.

## Revendications

1. Ensemble de motorisation (150) pour aéronef (100) présentant une direction longitudinale (X), l'ensemble de motorisation (150) comportant :
- une structure (302),
- un capot de nez (154) solidaire de la structure (302) et délimitant une entrée d'air (156),
- un premier et un deuxième capots de soufflante (160a-b) disposés à l'arrière du capot de nez (154) autour de la structure (302), où chaque capot de soufflante (160a-b) comporte un bord avant (414a) et un bord arrière (414b) qui sont arqués, et un bord proximal (406a-b) et un bord distal (408a-b) qui relient entre eux les bords avant (414a) et arrière (414b),
- deux capots inverseurs de poussée (162) disposés à l'arrière des capots de soufflante (160a-b) autour de la structure (302),
- un système de charnière (404) structurellement solidaire uniquement des capots de soufflante (160a-b),
- un système de verrouillage (410) déporté du système de charnière (404), et
- des moyens de positionnement (308, 310, 312) répartis entre chaque capot de soufflante (160a-b) et la structure (302) pour assurer un blocage du capot de soufflante (160a-b) parallèlement à une direction longitudinale (X),
où le bord proximal (406a) du premier capot de soufflante (160a) est monté de manière articulée au bord proximal (406b) du deuxième capot de soufflante (160b) par le système de charnière (404) et où le bord distal (408a) du premier capot de soufflante (160a) est relié au bord distal (408b) du deuxième capot de soufflante (160b) par le système de verrouillage (410) qui peut prendre alternativement une position de verrouillage dans laquelle les deux bords distaux (408a-b) sont verrouillés l'un avec l'autre et une position de déverrouillage dans laquelle les deux bords distaux (408a-b) sont libres l'un par rapport à l'autre et **caractérisé en ce que** les moyens de positionnement comportent une nervure (308) réalisée le long d'au moins un des bords avant (414a) ou arrière (414b) de chaque capot de soufflante (160a-b) et une rainure (310) réalisée dans la structure (302) et où la nervure (308) est logée dans la rainure (310).

2. Ensemble de motorisation (150) selon la revendication 1, **caractérisé en ce que** les premier et deuxième capots de soufflante (160a-b) sont de part et d'autre d'un plan médian vertical (P) de l'ensemble de motorisation (150).

3. Ensemble de motorisation (150) selon la revendication 2, **caractérisé en ce que** le système de charnière (404) est disposé à 6 heures, et **en ce que** le système de verrouillage (410) est disposé à 12 heures.

4. Ensemble de motorisation (150) selon l'une des revendications 1 à 3, **caractérisé en ce que** chaque capot de soufflante (160a-b) prend la forme d'une peau (516) renforcée sur sa face intérieure par des profilés (518) fixés à ladite peau et **en ce qu'**au moins un desdits profilés (518) constitue une nervure (308) des moyens de positionnement.

5. Ensemble de motorisation (150) selon l'une des revendications 1 à 4, **caractérisé en ce que** les moyens de positionnement comportent des doigts (312) qui s'étendent radialement par rapport à la direction longitudinale (X) et sont solidaires de chaque capot de soufflante (160a-b) et pour chaque doigt (312), un logement réalisé dans la structure (302) et où ledit doigt (312) loge dans ledit logement.

6. Ensemble de motorisation (150) selon l'une des revendications précédentes, **caractérisé en ce que** le système de charnière (404) comporte une poutre (502) arrangée entre les bords proximaux (406a-b) des deux capots de soufflante (160a-b), et pour chaque capot de soufflante (160a-b), une pluralité de leviers (504) où, pour chacun, une extrémité est fixée rigidement au capot de soufflante (160a-b) et une extrémité est montée libre en rotation sur la poutre (502) autour d'un axe de rotation.

7. Ensemble de motorisation (150) selon la revendication précédente, **caractérisé en ce que** le système de charnière (404) comporte un cache (508) fixé de manière amovible contre la face de la poutre (502) orientée vers l'extérieur et dimensionné pour venir contre le bord proximal (406a-b) de chaque capot de soufflante (160a-b).

8. Ensemble de motorisation (150) selon l'une des revendications 6 ou 7, **caractérisé en ce qu'**il comporte un système de détrompeur (510) entre la poutre (502) et la structure (302).

## Patentansprüche

1. Motorisierungseinheit (150) für ein Luftfahrzeug (100), welche eine Längsrichtung (X) aufweist, wobei die Motorisierungseinheit (150) umfasst:
- eine Struktur (302),
- eine Nasenhaube (154), die mit der Struktur (302) fest verbunden ist und einen Lufteinlass (156) begrenzt,
- eine erste und eine zweite Lüfterhaube (160a-b), die hinter der Nasenhaube (154) um die Struktur (302) herum angeordnet sind, wobei jede Lüfterhaube (160a-b) einen vorderen Rand (414a) und einen hinteren Rand (414b), die bogenförmig sind, und einen proximalen Rand (406a-b) und einen distalen Rand (408a-b), die den vorderen (414a) und den hinteren Rand (414b) miteinander verbinden, umfasst,
- zwei Schubumkehrhauben (162), die hinter den Lüfterhauben (160a-b) um die Struktur (302) herum angeordnet sind,
- ein Scharniersystem (404), das strukturell nur mit den Lüfterhauben (160a-b) fest verbunden ist,
- ein zum Scharniersystem (404) versetztes Verriegelungssystem (410) und
- Positioniermittel (308, 310, 312), die zwischen jeder Lüfterhaube (160a-b) und der Struktur (302) verteilt sind, um eine Arretierung der Lüfterhaube (160ab) parallel zu einer Längsrichtung (X) sicherzustellen, wobei der proximale Rand (406a) der ersten Lüfterhaube (160a) durch das Scharniersystem (404) gelenkig am proximalen Rand (406b) der zweiten Lüfterhaube (160b) angebracht ist und wobei der distale Rand (408a) der ersten Lüfterhaube (160a) mit dem distalen Rand (408b) der zweiten Lüfterhaube (160b) durch das Verriegelungssystem (410) verbunden ist, welches abwechselnd eine Verriegelungsposition, in der die zwei distalen Ränder (408a-b) miteinander verriegelt sind, und eine Entriegelungsposition, in der die zwei distalen Ränder (408a-b) relativ zueinander frei sind, einnehmen kann, **dadurch gekennzeichnet, dass** die Positioniermittel eine Rippe (308), die entlang des vorderen (414a) und/oder des hinteren Randes (414b) jeder Lüfterhaube (160a-b) ausgebildet ist, und eine Nut (310), die in der Struktur (302) ausgebildet ist, umfassen, und wobei die Rippe (308) in der Nut (310) aufgenommen ist.

2. Motorisierungseinheit (150) nach Anspruch 1, **dadurch gekennzeichnet, dass** sich die erste und die zweite Lüfterhaube (160a-b) beiderseits einer vertikalen Mittelebene (P) der Motorisierungseinheit (150) befinden.

3. Motorisierungseinheit (150) nach Anspruch 2, **dadurch gekennzeichnet, dass** das Scharniersystem (404) in einer 6-Uhr-Position angeordnet ist, und dadurch, dass das Verriegelungssystem (410) in einer 12-Uhr-Position angeordnet ist.

4. Motorisierungseinheit (150) nach einem der Ansprüche 1 bis 3, **dadurch gekennzeichnet, dass** jede Lüfterhaube (160a-b) die Form einer Haut (516) annimmt, die auf ihrer Innenseite durch an der Haut befestigte Profile (518) verstärkt ist, und dadurch, dass mindestens eines der Profile (518) eine Rippe (308) der Positioniermittel bildet.

5. Motorisierungseinheit (150) nach einem der Ansprüche 1 bis 4, **dadurch gekennzeichnet, dass** die Positioniermittel Finger (312), die sich radial bezüglich der Längsrichtung (X) erstrecken und mit jeder Lüfterhaube (160a-b) fest verbunden sind, und für jeden Finger (312) eine in der Struktur (302) ausgebildete Aufnahme umfassen, und wobei der Finger (312) in der Aufnahme aufgenommen wird.

6. Motorisierungseinheit (150) nach einem der vorhergehenden Ansprüche, **dadurch gekennzeichnet, dass** das Scharniersystem (404) einen Träger (502) umfasst, der zwischen den proximalen Rändern (406a-b) der zwei Lüfterhauben (160a-b) angeordnet ist, und für jede Lüfterhaube (160a-b) mehrere Hebel (504), wobei von jedem ein Ende starr an der Lüfterhaube (160a-b) befestigt ist und ein Ende am Träger (502) frei drehbar um eine Drehachse angebracht ist.

7. Motorisierungseinheit (150) nach dem vorhergehenden Anspruch, **dadurch gekennzeichnet, dass** das Scharniersystem (404) eine Abdeckung (508) umfasst, die lösbar an der nach außen gerichteten Stirnseite des Trägers (502) anliegend befestigt ist und so bemessen ist, dass sie am proximalen Rand (406a-b) jeder Lüfterhaube (160a-b) zur Anlage kommt.

8. Motorisierungseinheit (150) nach einem der Ansprüche 6 oder 7, **dadurch gekennzeichnet, dass** sie ein Verwechselungsschutzsystem (510) zwischen dem Träger (502) und der Struktur (302) umfasst.

## Claims

1. Drive unit (150) for an aircraft (100) having a longitudinal direction (X), the drive unit (150) comprising:
- a structure (302),
- a nose cowl (154) secured to the structure (302) and delimiting an air inlet (156),
- a first and a second fan cowl (160a-b), these being arranged to the rear of the nose cowl (154) around the structure (302), where each fan cowl (160a-b) comprises a front edge (414a) and a rear edge (414b) which are arched, and a proximal edge (406a-b) and a distal edge (408a-b) which join together the front (414a) and rear edges (414b),
- two thrust reverser cowls (162) arranged to the rear of the fan cowls (160a-b) around the structure (302),
- a hinge system (404) structurally secured to the fan cowls (160a-b) only,
- a locking system (410) offset away from the hinge system (404), and
- positioning means (308, 310, 312) distributed between each fan cowl (160a-b) and the structure (302) for immobilizing the fan cowl (160a-b) parallel to a longitudinal direction (X),
where the proximal edge (406a) of the first fan cowl (160a) is mounted such that it is articulated to the proximal edge (406b) of the second fan cowl (160b) by the hinge system (404) and where the distal edge (408a) of the first fan cowl (160a) is connected to the distal edge (408b) of the second fan cowl (160b) by the locking system (410) which is able alternately to adopt a locked position in which the two distal edges (408a-b) are locked together and an unlocked position in which the two distal edges (408a-b) are free relative to one another, and **characterized in that** the positioning means comprise a rib (308) produced along at least one of the front (414a) or rear (414b) edges of each fan cowl (160a-b) and a groove (310) produced in the structure (302) and where the rib (308) is housed in the groove (310).

2. Drive unit (150) according to Claim 1, **characterized in that** the first and second fan cowls (160a-b) lie one on each side of a vertical midplane (P) of the drive unit (150) .

3. Drive unit (150) according to Claim 2, **characterized in that** the hinge system (404) is arranged at the 6 o'clock position and **in that** the locking system (410) is arranged at the 12 o'clock position.

4. Drive unit (150) according to one of Claims 1 to 3, **characterized in that** each fan cowl (160a-b) takes the form of a skin (516) reinforced on its interior face by profile sections (518) attached to said skin and **in that** at least one of said profile sections (518) constitutes a rib (308) of the positioning means.

5. Drive unit (150) according to one of Claims 1 to 4, **characterized in that** the positioning means comprise fingers (312) which extend radially with respect to the longitudinal direction (X) and are secured to each fan cowl (160a-b) and, for each finger (312), a housing produced in the structure (302) and where said finger (312) is lodged in said housing.

6. Drive unit (150) according to one of the preceding claims, **characterized in that** the hinge system (404) comprises a beam (502) arranged between the proximal edges (406a-b) of the two fan cowls (160a-b), and, for each fan cowl (160a-b), a plurality of levers (504) where, in the case of each one, one end is fixed rigidly to the fan cowl (160a-b) and one end is mounted with the freedom to rotate on the beam (502) about an axis of rotation.

7. Drive unit (150) according to the preceding claim, **characterized in that** the hinge system (404) comprises a cover (508) fixed removably against that face of the beam (502) that faces towards the outside and is dimensioned to sit against the proximal edge (406a-b) of each fan cowl (160a-b).

8. Drive unit (150) according to one of Claims 6 and 7, **characterized in that** it comprises a poka-yoke system (510) between the beam (502) and the structure (302).
